(19) Europäisches Patentamt
European Patent Office
Office européen des brevets

(11) **EP 2 620 295 B1**

(12) **EUROPEAN PATENT SPECIFICATION**

(45) Date of publication and mention
of the grant of the patent:
**08.10.2014 Bulletin 2014/41**

(21) Application number: **12193764.3**

(22) Date of filing: **22.11.2012**

(51) Int Cl.:
*B60C 1/00* *(2006.01)*       *C08K 7/02* *(2006.01)*
*C08L 7/00* *(2006.01)*       *C08L 21/00* *(2006.01)*
*C08L 93/02* *(2006.01)*      *C08L 1/00* *(2006.01)*
*C08L 1/02* *(2006.01)*

(54) **Rubber composition for tire, method of producing the same, and pneumatic tire**

Kautschukzusammensetzung für Reifen, Verfahren zur Herstellung davon und Luftreifen

Composition de caoutchouc pour pneu, son procédé de production et bande pneumatique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.01.2012 JP 2012017254**

(43) Date of publication of application:
**31.07.2013 Bulletin 2013/31**

(73) Proprietor: **SUMITOMO RUBBER INDUSTRIES
LIMITED
Kobe-shi,
Hyogo-ken (JP)**

(72) Inventor: **Fujikura, Keitarou
Kobe-shi, Hyogo 651-0072 (JP)**

(74) Representative: **Manitz, Finsterwald & Partner
GbR
Martin-Greif-Strasse 1
80336 München (DE)**

(56) References cited:
**EP-A1- 0 328 261        EP-A1- 2 333 008
GB-A- 164 392           GB-A- 240 939
US-A- 2 140 527         US-A- 5 290 830
US-A1- 2007 241 480**

**Description**

TECHNICAL FIELD

The present invention relates to a rubber composition for a tire, a method of producing the rubber composition, and a pneumatic tire formed from the rubber composition.

BACKGROUND ART

Conventionally, it has been known that physical properties of rubber compositions can be improved by compounding microfibrillated plant fibers such as cellulose fibers as filler into the rubber compositions. However, when microfibrillated plant fibers are compounded into a rubber composition, the elongation at break tends to be reduced, and the fuel economy also tends to be reduced due to energy loss in the interface between the fibers and the rubber component since microfibrillated plant fibers have poor compatibility with the rubber component. Therefore, unless these properties are improved, microfibrillated plant fibers are difficult to apply to tires for various uses and in particular those used for a long period of time under harsh conditions.

Patent Literature 1 proposes a technique of enhancing the compatibility of cellulose fibers with the rubber component by chemically treating the surface of cellulose fibers to introduce a hydrophobic group. Further, in recent years, there has been proposed a technique of enhancing the compatibility of pulp with the rubber component by chemically treating pulp with a silane coupling agent containing an amino group. However, all these techniques require chemical reaction processes, and therefore a simpler technique is desired.

US 2007/0241480 A1 relates to a rubber/short fiber master batch obtainable by steering and mixing an aqueous dispersion of short fibers having an average diameter of less than 0.5 $\mu$m and rubber latex.

EP 2 333 008 A1 discloses a rubber composition including cellulose fibers having an average diameter between 1 nm and 4.000 nm.

EP 0 328 261 A1 relates to a pneumatic tire with a tread portion comprising an elastomeric composition including a long chain hydroxyl fatty acid.

US 5,290,830 relates to a reinforced elastomeric article including reticulated bacterial cellulose having an average diameter of about 0.1 $\mu$m and a certain aspect ratio.

GB 240,939, US 2,140,527 and GB 164,392 disclose rubber compositions including shellac.

CITATION LIST

PATENT LITERATURE

Patent Literature 1: JP 2009-84564 A

SUMMARY OF INVENTION

TECHNICAL PROBLEM

The present invention aims to solve the above problem and provide a rubber composition for a tire, in which while the use of petroleum resources is reduced as much as possible, the compatibility of microfibrillated plant fibers with the rubber component is enhanced by a simple method, which can lead to a balanced improvement in tensile properties, handling stability, and fuel economy; a method of producing the rubber composition; and a pneumatic tire formed from the rubber composition.

SOLUTION TO PROBLEM

The present invention relates to a rubber composition for a tire, containing a rubber component, microfibrillated plant fibers, and natural shellac resin, wherein the natural shellac resin is contained in an amount of 0.1 to 50 parts by mass with respect to 100 parts by mass of the micro-fibrillated plant fibers.

It is preferable that the rubber component should include at least one selected from the group consisting of natural rubber, modified natural rubber, synthetic rubber, and modified synthetic rubber.

It is preferable that the microfibrillated plant fibers should be cellulose microfibrils.

It is preferable that the microfibrillated plant fibers should have an average fiber diameter of 10 $\mu$m or less.

It is preferable that the microfibrillated plant fibers should be contained in an amount of 1 to 100 parts by mass with respect to 100 parts by mass of the rubber component.

It is preferable that the natural shellac resin should be contained in an amount of 0.1 to 50 parts by mass with respect to 100 parts by mass of the microfibrillated plant fibers.

The present invention also relates to a method of producing the rubber composition, including the steps of: (I) mixing the microfibrillated plant fibers with the natural shellac resin; and (II) adding the rubber component to the mixture obtained in the step (I) and further mixing them.

The present invention also relates to a pneumatic tire formed from the rubber composition.

ADVANTAGEOUS EFFECTS OF INVENTION

According to the invention, since the rubber composition for a tire contains a rubber component, microfibrillated plant fibers, and natural shellac resin, and it is thus possible to enhance the compatibility of microfibrillated plant fibers with the rubber component by a simple method, namely, by addition of natural shellac resin, both the rigidity and the elongation at break can be satisfied while good fuel economy is maintained. Accordingly, a pneumatic tire can be provided whose tensile properties, handling stability, and fuel economy are improved in a well-balanced manner. Further, since microfibrillated plant fibers and natural shellac resin are not materials made from petroleum, the use of petroleum resources can be reduced for environmental friendliness.

DESCRIPTION OF EMBODIMENTS

The rubber composition according to the invention contains a rubber component, microfibrillated plant fibers, and natural shellac resin. The adhesion in the interface between the rubber component and the microfibrillated plant fibers is improved by adding the natural shellac resin, and therefore the energy loss in the interface will be reduced. Further, the contact points where the microfibrillated plant fibers are tangled with one another are reinforced by the natural shellac resin, and therefore the breaking strength is enhanced. Due to these effects, both the rigidity and the elongation at break can be satisfied while increase in energy loss is suppressed. Accordingly, by using the rubber composition for production of tires, pneumatic tires can be provided whose tensile properties, handling stability, and fuel economy are improved in a well-balanced manner.

In addition, since both the microfibrillated plant fibers and the natural shellac resin are not materials made from petroleum (namely, they are non-petroleum resources), the use of petroleum resources can be reduced.

The method of producing the rubber composition according to the invention is not particularly limited, provided that it includes mixing the rubber component, microfibrillated plant fibers, and natural shellac resin. For example, a production method is suitably employed which includes the steps of: (I) mixing the microfibrillated plant fibers with the natural shellac resin; and (II) adding the rubber component to the mixture obtained in the step (I) and further mixing them.

(Step (I))

In the step (I), the microfibrillated plant fibers are mixed with the natural shellac resin. By mixing the microfibrillated plant fibers with the natural shellac resin in advance as mentioned, when the rubber component is mixed with the mixture obtained in the step (I) in the step (II) described later, the microfibrillated plant fibers can be sufficiently dispersed into the rubber component. In terms of the fact that the microfibrillated plant fibers can be easily mixed with the natural shellac resin, in the step (I), it is preferable to mix the microfibrillated plant fibers and the natural shellac resin in a solvent such as water.

As the microfibrillated plant fibers used in the step (I), cellulose microfibrils are preferred in terms of better reinforcement. Examples of the cellulose microfibrils include those derived from natural products such as wood, bamboo, hemp, jute, kenaf, crop wastes, cloth, recycled pulp, wastepaper, bacterial cellulose, and ascidian cellulose.

The method of producing the microfibrillated plant fibers is not particularly limited, and for example, a method may be mentioned in which a raw material for the cellulose microfibrils is chemically treated with a chemical such as sodium hydroxide and then mechanically ground or beaten by a machine such as a refiner, a twin-screw kneader (twin-screw extruder), a twin-screw kneading extruder, a high-pressure homogenizer, a media agitating mill, a stone mill, a grinder, a vibrating mill, or a sand grinder. In this method, since lignin is separated from the raw material by chemical treatment, microfibrillated plant fibers containing substantially no lignin are obtained.

The microfibrillated plant fibers preferably have an average fiber diameter of 10 $\mu$m or less, more preferably 5 $\mu$m or less, further preferably 1 $\mu$m or less, and particularly preferably 0.5 $\mu$m or less because the balance between rubber reinforcement and elongation at break is good. Although the lower limit of the average fiber diameter of microfibrillated plant fibers is not particularly limited, it is preferably 4 nm or more from the viewpoint that in the case where a solvent such as water is used in the step (I), deterioration of workability due to deterioration of drainage can be suppressed.

The microfibrillated plant fibers preferably have an average fiber length of 5 mm or less, and more preferably 1 mm or less, but preferably of 1 $\mu$m or more, and more preferably 50 $\mu$m or more. If the average fiber length is less than the lower limit or if the average fiber length exceeds the upper limit, the same tendency is shown as for the average fiber diameter described above.

The average fiber diameter and the average fiber length of microfibrillated plant fibers can be measured by image analysis of scanning electron micrographs, image analysis of transmission electron micrographs, analysis of X-ray scattering data, a pore electric resistance method (Coulter principle method), or the like.

In the step (I), it is preferable to use an aqueous dispersion of the microfibrillated plant fibers. This enables the microfibrillated plant fibers and natural shellac resin to be uniformly mixed in a short time. The content of microfibrillated plant fibers (solid content) in the aqueous dispersion of the microfibrillated plant fibers is preferably in a range of 2 to 40% by mass, and more preferably of 5 to 30% by mass.

The natural shellac resin used in the step (I) is obtained by purifying a resinous secretion from *Laccifer Lacca,* and mainly contains esters of aleuritic acid, which is a linear resin, with jalaric acid or laccijararic acid, both of which are sesquiterpene resins. Examples of the natural shellac resin include purified shellac, decolorized shellac obtained by decolorizing the purified shellac, and bleached shellac obtained by bleaching the purified shellac. Also, modified shellac resin such as styrenated shellac and acrylated shellac may be used.

In the step (I), it is preferable to compound the components such that they are contained in amounts described later in the rubber composition of the invention. Then the balance between rubber reinforcement, elongation at break, and energy loss becomes favorable.

The method of mixing the components in the step (I) is not particularly limited, and commonly used methods may be used such as agitation by, for example, a propeller mixer, a homogenizer, a rotary mixer, or an electromagnetic mixer, as well as manual agitation.

(Step (II))

In the step (II), the rubber component is added to the mixture obtained in the step (I), and they are further mixed. In this step, the microfibrillated plant fibers and the rubber component are combined.

It is preferable that the rubber component used in the step (II) should include at least one selected from the group consisting of natural rubber, modified natural rubber, synthetic rubber, and modified synthetic rubber. As the rubber component, for example, diene rubbers may be mentioned and specific examples thereof include natural rubber (NR), butadiene rubber (BR), styrene-butadiene copolymer rubber (SBR), isoprene rubber (IR), butyl rubber (IIR), acrylonitrile-butadiene rubber (NBR), acrylonitrile-styrene-butadiene copolymer rubber, chloroprene rubber, styrene-isoprene copolymer rubber, styrene-isoprene-butadiene copolymer rubber, isoprene-butadiene copolymer rubber, chlorosulfonated polyethylene, and modified natural rubber such as epoxidized natural rubber (ENR), hydrogenated natural rubber, and deproteinized natural rubber. Further, examples of rubber materials other than diene rubbers include ethylene-propylene copolymer rubber, acrylic rubber, epichlorohydrin rubber, polysulfide rubber, silicone rubber, fluororubber, urethane rubber, and the like. These rubber materials may be used alone, or may be used as a blend of two or more species. With respect to the blending ratio of the blend, rubber materials may appropriately be blended according to the particular applications. Among the examples, NR, BR, SBR, IR, IIR, and ENR are preferred because they are advantageous in terms of versatility and cost and because good workability is shown at the time of mixing with the microfibrillated plant fibers. From the viewpoint of reducing the use of petroleum resources for environmental friendliness, NR and ENR, which are materials derived from non-petroleum resources, are more preferred.

Also, in terms of the fact that the microfibrillated plant fibers and the rubber component can be uniformly mixed in a short time, the rubber component is preferably used in the state of latex. The content of the rubber component (solid content) in rubber latex is preferably in a range of 30 to 80% by mass, and more preferably of 40 to 70% by mass.

In the step (II), it is preferable to compound the components such that they are contained in amounts described later in the rubber composition of the invention. Then the balance between rubber reinforcement, elongation at break, and energy loss becomes favorable, and the yields of the materials and workability also become favorable.

The method of mixing the components in the step (II) is not particularly limited, and the same methods as in the step (I) may be used.

As a result of the steps (I) and (II), a masterbatch with microfibrillated plant fibers dispersed uniformly in a rubber matrix is prepared. In the case where the mixture obtained in the step (II) is in a slurry state, the mixture is solidified and dried by known methods, and then kneaded by a Banbury mixer or the like, whereby a masterbatch can be prepared.

The rubber composition according to the invention can be prepared from the masterbatch by a known method. For example, the rubber composition can be prepared by, for example, a method including kneading the masterbatch and other ingredients by a Banbury mixer, a kneader, an open roll mill or the like, and then vulcanizing the mixture. Other compounding ingredients include, for example, reinforcing agents (e.g. carbon black, silica), silane coupling agents, vulcanizing agents, stearic acid, vulcanization accelerators, vulcanization accelerator aids, oil, hardening resin, wax, and antioxidants.

In the rubber composition according to the invention, the microfibrillated plant fibers are preferably contained in an amount of 1 part by mass or more, and more preferably 5 parts by mass or more, but preferably in an amount of 100 parts by mass or less, and more preferably 20 parts by mass or less, with respect to 100 parts by mass of the rubber component. When the amount is in the range, the microfibrillated plant fibers are favorably dispersed, so that the tensile properties, handling stability, and fuel economy can be improved in a well-balanced manner.

In the rubber composition according to the invention, the natural shellac resin is contained in an amount of 0.1 parts by mass or more, and preferably 1 part by mass or more, but in an amount of 50 parts by mass or less, and preferably 20 parts by mass or less, with respect to 100 parts by mass of the microfibrillated plant fibers. When the amount is in the range, the microfibrillated plant fibers are favorably dispersed, so that the tensile properties, handling stability, and fuel economy can be improved in a well-balanced manner.

The content of non-petroleum resources is preferably 70% by mass or more, more preferably 80% by mass or more, and further preferably 97% by mass or more, based on 100% by mass of the rubber composition. According to the invention, since the above components are used in combination, even when the content of non-petroleum resources is large, the tensile properties, handling stability, and fuel economy are satisfied in a well-balanced manner.

Here, the content of non-petroleum resources can be determined for example by measuring the amount of [$^{14}$C] carbon dioxide present in exhaust gas resulting from the combustion of a rubber composition, and comparing the differences in $^{14}$C from a material derived from non-petroleum resources and a material derived from petroleum resources.

The rubber composition according to the invention is usable for tire components and can be suitably used especially for treads and sidewalls.

The pneumatic tire according to the invention can be formed from the rubber composition by a known method. Specifically, an unvulcanized rubber composition with additives compounded as needed is extruded and processed into the shape of a tire component, and then molded in a tire building machine by a usual method to form an unvulcanized tire. The unvulcanized tire is then heated and pressurized in a vulcanizer to produce a tire.

The pneumatic tire according to the invention can be suitably used for passenger cars, trucks and buses, and the like.

EXAMPLES

The invention will be more specifically described with reference to examples. However, the invention is not limited only thereto.

Hereinafter, various chemicals used in the examples, comparative example, and reference example will be collectively described.

Natural rubber latex: HYTEX HA (natural rubber latex manufactured by Golden Hope Plantations, solid content: 60% by mass, average particle size: 1 μm)

Microfibrillated plant fibers: CELISH KY-100G manufactured by Daicel Corporation (average fiber length: 0.5 mm, average fiber diameter: 0.02 μm, solid content: 10% by mass)

Natural shellac resin: Shellac resin (GSN) manufactured by Gifu Shellac Manufacturing Co., Ltd.

Masterbatches 1 to 4: prepared in the following Production Examples

Antioxidant: NOCRAC 6C manufactured by Ouchi Shinko Chemical Industrial Co., Ltd.

Stearic acid: stearic acid beads "TSUBAKI" manufactured by NOF Corporation

Zinc oxide: zinc oxide #2 manufactured by Mitsui Mining & Smelting Co., Ltd.

Sulfur: powder sulfur manufactured by Tsurumi Chemical Industry Co., Ltd.

Vulcanization accelerator: NOCCELER DM manufactured by Ouchi Shinko Chemical Industrial Co., Ltd.

<Production Example 1: Preparation of Masterbatch 1>

According to the formulation in Table 1, microfibrillated plant fibers and natural shellac resin were agitated and dispersed in water for 1 hour at 24,000 rpm by using a high-speed homogenizer (batch homogenizer T65D Ultra-Turrax (Ultra-Turrax T25) manufactured by IKA), and subsequently natural rubber latex was added thereto and the fibers were further agitated and dispersed for 30 minutes. The resulting mixture was solidified with a 5% by mass aqueous solution of formic acid, washed with water, and then dried in an oven heated to 40°C to give a masterbatch 1.

<Production Example 2: Preparation of Masterbatch 2>

A masterbatch 2 was obtained in the same manner as for the masterbatch 1 except that the amount of natural shellac resin was changed.

<Production Example 3: Preparation of Masterbatch 3>

A masterbatch 3 was obtained in the same manner as for the masterbatch 1 except that no natural shellac resin was used.

<Production Example 4: Preparation of Masterbatch 4>

A masterbatch 4 was obtained by solidifying natural rubber latex as it is with a 5% by mass aqueous solution of formic acid, washing it with water, and then drying it in an oven heated to 40°C.

[Table 1]

| | Masterbatch | | | |
|---|---|---|---|---|
| | 1 | 2 | 3 | 4 |
| Microfibrillated plant fibers (g) | 150 | 150 | 150 | - |
| Natural shellac resin (g) | 0.6 | 0.3 | - | - |
| Water (g) | 1350 | 1350 | 1350 | - |
| Natural rubber latex (g) | 250 | 250 | 250 | 250 |

<Preparation of Vulcanized Rubber Compositions>

According to the formulation in Table 2, each masterbatch was mixed and kneaded with chemicals other than the vulcanization accelerator and sulfur for 3 minutes at 88 rpm by using a 250 cc internal mixer heated to 135°C, and then the kneaded rubber mixture was discharged. To the rubber mixture were added the vulcanization accelerator and sulfur and they were kneaded for 5 minutes by a 6-inch open roll mill at 60°C and 24 rpm to give an unvulcanized rubber composition. By press-heating the thus obtained unvulcanized rubber compositions at 150°C, vulcanized rubber compositions corresponding to Example 1, Example 2, Comparative Example 1, and Reference Example 1 were obtained.

<Examples, Comparative Example, and Reference Example>

Evaluations shown below were performed on the vulcanized rubber compositions prepared by the above method. Here, indices in the property data shown in Table 2 were calculated by the formulae described later, with Reference Example 1 being taken as a reference formulation. In Table 2, the content of non-petroleum resources refers to the content (% by mass) of non-petroleum resources based on 100% by mass of the rubber composition.

(Tensile Test)

The tensile stress at 100%, tensile stress at 300%, breaking stress, elongation at break, and breaking energy were measured according to JIS K 6251 "Rubber, vulcanized or thermoplastic -- Determination of tensile stress-strain properties". The indices of tensile stress at 100%, of tensile stress at 300%, of tensile strength, of elongation at break, and of breaking energy were calculated by the following formulae:

```
     (Index of tensile stress at 100%) = (Tensile stress
  at 100% in each formulation)/(Tensile stress at 100% in
  reference formulation) × 100;


     (Index of tensile stress at 300%) = (Tensile stress
   at 300% in each formulation)/(Tensile stress at 300% in
  reference formulation) × 100;
```

$$(\text{Index of tensile strength}) = (\text{Breaking stress of each formulation})/(\text{Breaking stress of reference formulation}) \times 100;$$

$$(\text{Index of elongation at break}) = (\text{Elongation at break of each formulation})/(\text{Elongation at break of reference formulation}) \times 100;$$

$$(\text{Index of breaking energy}) = (\text{Breaking energy of each formulation})/(\text{Breaking energy of reference formulation}) \times 100.$$

The larger the index is, the more favorably the vulcanized rubber composition is reinforced, which indicates higher mechanical strength of rubber, and better tensile properties.

(Indices of Handling Stability and Rolling Resistance)

Test pieces for measurement were cut from 2-mm-thick rubber slab sheets of the vulcanized rubber compositions prepared by the above method, and the E* (complex modulus) and tanδ (loss tangent) of each test piece for measurement were measured using a viscoelastic spectrometer VES (manufactured by Iwamoto Seisakusho Co., Ltd.) under the conditions of temperature 70°C, initial strain 10%, dynamic strain 2%, and frequency 10 Hz. The indices of handling stability and of rolling resistance were calculated by the following formulae:

$$(\text{Index of handling stability}) = (\text{E* of each formulation})/(\text{E* of reference formulation}) \times 100;$$

$$(\text{Index of rolling resistance}) = (\tan\delta \text{ of each formulation})/(\tan\delta \text{ of reference formulation}) \times 100.$$

The larger the index of handling stability is, the better the handling stability will be when the rubber composition is used in a pneumatic tire. The smaller the index of rolling resistance is, the better the performance in terms of rolling resistance (fuel economy) will be when the rubber composition is used in a pneumatic tire.

[Table 2]

| | | Example 1 | Example 2 | Comparative Example 1 | Reference Example 1 |
|---|---|---|---|---|---|
| Formulation (part(s) by mass) | Masterbatch 1 | 110.4 | — | — | — |
| | Masterbatch 2 | — | 110.2 | — | — |
| | Masterbatch 3 | — | — | 110 | — |
| | Masterbatch 4 | — | — | — | 100 |
| | Antioxidant | 2 | 2 | 2 | 2 |
| | Stearic acid | 1.5 | 1.5 | 1.5 | 1.5 |
| | Zinc oxide | 2.5 | 2.5 | 2.5 | 2.5 |
| | Sulfur | 1.5 | 1.5 | 1.5 | 1.5 |
| | Vulcanization accelerator | 1 | 1 | 1 | 1 |
| Content of non-petroleum resources (% by mass) | | 97.47 | 97.47 | 97.46 | 97.24 |
| Vulcanization temperature (°C) | | 150 | 150 | 150 | 150 |
| Evaluation | Index of tensile stress at 100% | 848 | 819 | 569 | 100 |
| | Index of tensile stress at 300% | 1001 | 953 | 747 | 100 |
| | Index of tensile strength | 130 | 129 | 109 | 100 |
| | Index of elongation at break | 113 | 109 | 96 | 100 |
| | Index of breaking energy | 138 | 140 | 104 | 100 |
| | Index of handling stability | 695 | 715 | 577 | 100 |
| | Index of rolling resistance | 143 | 143 | 150 | 100 |

As shown in Table 2, in Comparative Example 1 in which microfibrillated plant fibers were contained but no natural shellac resin was contained, the tensile stress and the like were improved compared with Reference Example 1; however, the elongation at break and fuel economy were inferior. In contrast, in Examples 1 and 2 in which microfibrillated plant fibers and natural shellac resin were contained, the fuel economy and elongation at break were improved compared with Comparative Example 1. In addition, other performances were also better than those in Comparative Example 1.

## Claims

1. A rubber composition for a tire, comprising:

   a rubber component;
   microfibrillated plant fibers; and
   natural shellac resin,

   wherein the natural shellac resin is contained in an amount of 0.1 to 50 parts by mass with respect to 100 parts by mass of the microfibrillated plant fibers.

2. The rubber composition for a tire according to Claim 1, wherein the rubber component comprises at least one selected from the group consisting of natural rubber, modified natural rubber, synthetic rubber, and modified synthetic rubber.

3. The rubber composition for a tire according to Claim 1 or 2, wherein the microfibrillated plant fibers are cellulose microfibrils.

4. The rubber composition for a tire according to any of the preceding Claims, wherein the microfibrillated plant fibers have an average fiber diameter of 10 μm or less.

EP 2 620 295 B1

5. The rubber composition for a tire according to any of the preceding Claims,
wherein the microfibrillated plant fibers are contained in an amount of 1 to 100 parts by mass with respect to 100 parts by mass of the rubber component.

6. A method of producing the rubber composition for a tire according to any of Claims 1 to 5, comprising the steps of:

(I) mixing the microfibrillated plant fibers with the natural shellac resin; and
(II) adding the rubber component to the mixture obtained in the step (I) and further mixing them.

7. A pneumatic tire formed from the rubber composition according to any of Claims 1 to 5.

**Patentansprüche**

1. Kautschukzusammensetzung für einen Reifen, welcher enthält:

eine Kautschukkomponente,
mikrofibrillierte Pflanzenfasern und
natürliches Schellackharz,

wobei das natürliche Schellackharz in einer Menge von 0,1 bis 50 Massenteilen bezogen auf 100 Massenteile der mikrofibrillierten Pflanzenfasern enthalten ist.

2. Kautschukzusammensetzung für einen Reifen nach Anspruch 1,
wobei die Kautschukkomponente wenigstens einen ausgewählt aus der Gruppe bestehend aus Naturkautschuk, modifiziertem Naturkautschuk, synthetischem Kautschuk und modifiziertem synthetischem Kautschuk enthält.

3. Kautschukzusammensetzung für einen Reifen nach Anspruch 1 oder 2,
wobei die mikrofibrillierten Pflanzenfasern Cellulose-Mikrofibrillen sind.

4. Kautschukzusammensetzung für einen Reifen nach einem der vorherstehenden Ansprüche,
wobei die mikrofibrillierten Pflanzenfasern einen durchschnittlichen Faserdurchmesser von 10 $\mu$m oder weniger aufweisen.

5. Kautschukzusammensetzung für einen Reifen nach einem der vorstehenden Ansprüche,
wobei die mikrofibrillierten Pflanzenfasern in einer Menge von 1 bis 100 Massenteilen bezogen auf 100 Massenteile der Kautschukkomponente enthalten sind.

6. Verfahren zum Herstellen einer Kautschukzusammensetzung für einen Reifen nach einem der Ansprüche 1 bis 5,
welches die nachfolgenden Schritte umfasst:

() Vermischen der mikrofibrillierten Pflanzenfasern mit dem natürlichen Schellackharz und
(II) Zugabe der Kautschukkomponente zu der in dem Schritt (I) erhaltenen Mischung und weiter Vermischen desselben.

7. Luftreifen gebildet aus einer Kautschukzusammensetzung nach einem der Ansprüche 1 bis 5.

**Revendications**

1. Composition de caoutchouc pour un pneumatique, comprenant :

un composant de caoutchouc ;
des fibres de plantes microfibrillées ; et
une résine de gomme-laque naturelle,
dans laquelle la résine de gomme-laque naturelle est contenue dans une quantité de 0,1 à 50 parties en masse par rapport à 100 parties en masse des fibres de plantes microfibrillées.

**2.** Composition de caoutchouc pour un pneumatique selon la revendication 1,
dans laquelle le composant de caoutchouc comprend au moins un composant sélectionné parmi le groupe comprenant caoutchouc naturel, caoutchouc naturel modifié, caoutchouc synthétique, et caoutchouc synthétique modifié.

**3.** Composition de caoutchouc pour un pneumatique selon la revendication 1 ou 2,
dans laquelle les fibres de plantes microfibrillées sont des microfibrilles de cellulose.

**4.** Composition de caoutchouc pour un pneumatique selon l'une quelconque des revendications précédentes,
dans laquelle les fibres de plantes microfibrillées ont un diamètre de fibres moyen de 10 $\mu$m ou moins.

**5.** Composition de caoutchouc pour un pneumatique selon l'une quelconque des revendications précédentes,
dans laquelle les fibres de plantes microfibrillées sont contenues dans une quantité de 1 à 100 parties en masse par rapport à 100 parties en masse du composant de caoutchouc.

**6.** Procédé pour produire la composition de caoutchouc pour un pneumatique selon l'une quelconque des revendications 1 à 5, comprenant les étapes consistant à :

(I) mélanger les fibres de plantes microfibrillées avec la résine de gomme-laque naturelle ; et
(II) ajouter le composant de caoutchouc au mélange obtenu dans l'étape (I) et en outre à les mélanger.

**7.** Bandage pneumatique formé à partir de la composition de caoutchouc selon l'une quelconque des revendications 1 à 5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070241480 A1
- EP 2333008 A1
- EP 0328261 A1
- US 5290830 A
- GB 240939 A
- US 2140527 A
- GB 164392 A
- JP 2009084564 A